# EUROPÄISCHE PATENTSCHRIFT

(11) **EP 0 864 489 B1**
(45) Veröffentlichungstag und Bekanntmachung des Hinweises auf die Patenterteilung: **04.06.2003**
(21) Anmeldenummer: 98103957.1
(22) Anmeldetag: 05.03.1998
(51) Int. Cl.: B64C 1/20, B64D 9/00, B65G 13/11

(54) **Bodenelement**
Floor element
Elément de plancher

(30) Priorität: 10.03.1997 DE 19709751; 24.03.1997 DE 19712278
(43) Veröffentlichungstag der Anmeldung: 16.09.1998
(73) Patentinhaber: Telair International GmbH, 83734 Hausham (DE)
(72) Erfinder: Huber, Thomas, 82393 Iffeldorf (DE); Dürrwaechter, Martin, 83737 Irschenberg (DE)
(74) Vertreter: Meissner, Bolte & Partner

(56) Entgegenhaltungen:
- DE-A- 3 421 345
- US-A- 3 592 145
- US-A- 3 902 583
- US-A- 5 390 775

## Beschreibung

Die Erfindung betrifft ein Bodenelement für das Ladedeck eines Flugzeugs zur Aufnahme und zum Verschieben von Fracht. Ein derartiges Bodenelement mit einem Trägerrahmen ist aus US 5 390 775 bekannt.

Zum Beladen eines Flugzeugs mit Fracht, insbesondere mit Containern, ist es bereits bekannt, am Flugzeugboden oder auf einem entsprechenden Ladedeck Bodenelemente vorzusehen, in die Kugeln, Rollen oder gegebenenfalls angetriebene Rollen eingesetzt sind.

Ein Bodenelement mit darin gehalterten Kugelelementen ist bereits aus der DE 34 21 345 bekannt. Das dort beschriebene Bodenelement besteht aus einer Bodenplatte sowie mehreren stranggepreßten Profilen mit Öffnungen zur Aufnahme der Kugelelemente. Bei dem dort gezeigten Bodenelement werden mehrere stranggepreßte Profile über eine gemeinsame Bodenplatte miteinander verbunden. Die Verbindung erfolgt deckplattenseitig über Blechstreifen.

Bei dem bekannten Bodenelement sind zwar die einzelnen stranggepreßten Profile relativ stabil, das gesamte über Bodenplatte und Blechstreifen verbundene Bodenelement ist aber relativ instabil.

Die Aufgabe der vorliegenden Erfindung besteht demgegenüber darin, ein verbessertes, in sich stabileres Bodenelement zu schaffen. Weiterhin soll ein Verfahren zum Herstellen eines derartigen Bodenelements eingegeben werden.

Diese Aufgabe wird in vorrichtungstechnischer Hinsicht durch einen Gegenstand mit den Merkmalen des Patentanspruchs 1 und in verfahrenstechnischer Hinsicht mit den Merkmalen des Patentanspruchs 11 gelöst.

Vorteilhafte Weiterbildungen sind in den Unteransprüchen angegeben.

Ein Hauptgedanke der Erfindung besteht darin, anstelle mehrerer einzelner stranggepreßter Profile, die über eine gemeinsame Bodenplatte und mehrere Blechstreifen nur unzureichend verbunden sind, einen Grundkörper für ein Bodenelement zu schaffen, der als ganzes als Hohlprofil ausgebildet ist. Ein solches Hohlprofil ist vorteilhafterweise einstückig ausgebildet.

Ein wesentlicher Aspekt ist auch, daß das erfindungsgemäße Bodenelement eine durchgehende Deckplatte aufweist, die ein tragendes Element der Gesamtkonstruktion bildet. Ein solches Bodenelement mit durchgehender Deckplatte ist einfacher in der Herstellung. Es ergibt sich durch das Bodenelement mit durchgehender Deckplatte im eingebauten Zustand ein optisch ansprechendes Erscheinungsbild des Ladedecks. Das Eindringen von Verunreinigungen oder Flüssigkeiten in Spalte einer mehrteiligen Deckplatte wird vermieden. Die Vorteile dieses Aspekts lassen sich auch erreichen, wenn das Hohlprofil nicht einstückig, sondern mehrteilig ausgebildet ist.

Bei der als bevorzugt angesehenen einstückigen Ausbildung des den Grundkörper bildenden Hohlprofils wird jedoch die Herstellung noch weiter vereinfacht.

Nach einem weiteren Aspekt wird durch ein Paar von zwischen der Deckplatte und der Bodenplatte angeordneten Profilstegen ein Kanal gebildet, der einen Aufnahmeraum für in Längsrichtung des Bodenelements beabstandet_einsetzbare Kugelelemente definiert. Im Bereich des Aufnahmeraums weist das Bodenelement eine besonders hohe Stabilität auf, so daß die von der Fracht auf die Kugelelemente übertragenen Belastungen zuverlässig aufgenommen werden. Zweckmäßigerweise sind die Profilstege entsprechend stark dimensioniert, so daß weitere Maßnahmen zum Abfangen der auf die Kugelelemente übertragenen Belastungen entfallen können.

Eine vorteilhafte Neuerung wird auch darin gesehen, daß das einen stabilen Grundkörper aufweisende Bodenelement mit entsprechenden Anschlußprofilen leicht an ein benachbartes Bodenelement angefügt werden kann. Das an dem Bodenelement vorgesehene Anschlußprofil kann als Federkeil ausgebildet sein, der in eine entsprechende Nut (bzw. zwischen Deckplatte und Bodenplatte eines anzuschließenden Bodenelements) eingreift.

Somit wird eine Anschlußmöglichkeit für weitere Bodenelemente nach Art einer Nut- und Federverbindung geschaffen. Es sind daher - bei entsprechendem Zuschnitt - Bodenelemente in nahezu beliebiger Weise miteinander kombinierbar.

Als besonders vorteilhaft wird es angesehen, das Hohlprofil, das den Grundkörper des Bodenelements bildet, als Strangpreßteil auszubilden. Damit ist der Grundkörper des Bodenelements auf einfache und vergleichsweise kostengünstige Weise herstellbar.

Die vergleichsweise stabile Ausbildung des Grundkörpers gestattet auch, noch weitere Aussparungen in der Deckplatte und/oder der Bodenplatte bzw. gegebenenfalls auch seitlich vorzusehen. Diese Aussparungen ermöglichen einen - unter Umständen auch nachträglichen - Einbau einer Antriebs- oder Befestigungseinrichtung, wie einer PDU oder eines Riegelelements (Latch). Gleichzeitig oder alternativ kann die Bodenplatte weiterhin Materialaussparungen, insbesondere in den Bereichen zwischen den Profilstegen aufweisen. Dadurch wird das Gesamtgewicht verringert. Das Hohlprofil ist aufgrund seiner Querschnittsform trotz solcher Aussparungen ausreichend stabil.

Um die Stabilität der Deckplatte im Bereich der Aufnahmeöffnungen für die Kugelelemente zu erhöhen, kann die Deckplatte an ihrer Unterseite im Kanal Verstärkungsrippen aufweisen. Diese Verstärkungsrippen verlaufen zweckmäßigerweise in Längsrichtung des Kanals. Sie bilden dann an den Aufnahmeöffnungen Halteabschnitte aus, in die entsprechende an der Außenseite des topfförmigen Kugelelements vorgesehene Einrichtungen eingreifen können. Durch diese Verstärkungsrippen wird also sowohl die Stabilität des Bodenelements als auch der Halt eines eingesetzten Kugelelements verbessert.

Nach dem im Patentanspruch 11 angegebenen Verfahren wird der Grundkörper für das Bodenelement ohne Zusammensetzen von Einzelteilen als einstückiges Hohlprofil durch Strangpreßen hergestellt. Anschließend werden Aufnahmeöffnungen für die Kugelelemente sowie gegebenenfalls weitere Aussparungen für eine Antriebseinrichtung und/oder eine Befestigungseinrichtung eingearbeitet. Schließlich werden alle oder nur ein Teil der Aufnahmeöffnungen mit Kugelelementen versehen. Wenn nicht alle Aufnahmeöffnungen mit Kugelelementen versehen werden, können diese durch entsprechende Abdeckungen verschlossen werden.

Schließlich ist im Patentanspruch 12 noch ein Trägerrahmen angegeben. Der Trägerrahmen gestattet einen - ggf. auch nachträglichen - Einbau einer Antriebseinrichtung oder einer Befestigungseinrichtung in das Bodenelement. Ein solcher Trägerrahmen weist eine Grundplatte und darauf angeordnete Seitenwände auf, die zur Anlage an den Rändern der Aussparungen in der Deckplatte und/oder der Bodenplatte vorgesehen sind. Zweckmäßig ist es, die Grundplatte so über die Seitenwände überstehen zu lassen, daß eine Befestigungslasche gebildet wird, die beim Einsatz in das Bodenelement mit der Bodenplatte in Anlage gebracht werden kann. Die Befestigung des Trägerrahmens am Bodenelement kann dadurch erfolgen, daß die Befestigungslasche des Trägerrahmens mit der Bodenplatte des Bodenelements verschraubt oder vernietet wird.

Die Erfindung wird nachstehend auf hinsichtlich weiterer Merkmale und Vorteile anhand der Beschreibung eines Ausführungsbeispiels und unter Bezugnahme auf die beiliegenden Zeichnungen näher erläutert. Hierbei zeigen
- Fig. 1: eine Ausführungsform eines Bodenelements nach der Erfindung in Explosionsdarstellung;
- Fig. 2: eine Schnittansicht des Bodenelements entlang der Linie II-II in Fig. 1;
- Fig. 3: das Bodenelement nach Fig. 1 in perspektivischer Ansicht schräg von unten;
- Fig. 4: das Bodenelement nach Fig. 1 in perspektivischer Ansicht schräg von oben; und
- Fig. 5: eine Schnittansicht durch das Bodenelement entlang der Linie V-V in Fig. 4.

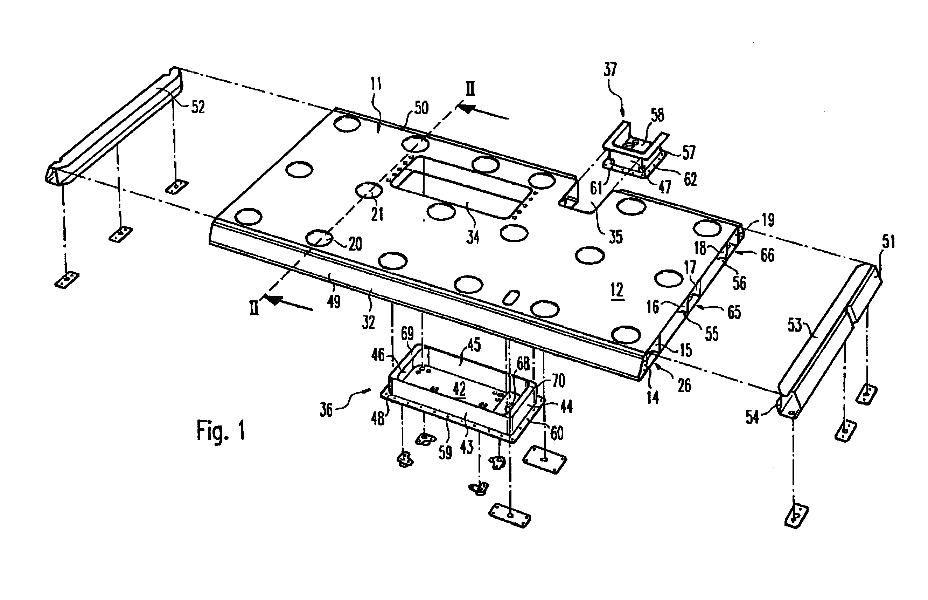

In Fig. 1 ist eine Ausführungsform des Bodenelements in Explosionsdarstellung gezeigt. Das Bodenelement besteht aus einem stranggepreßten Hohlprofil 11 sowie Seitenprofilen 51, 52, welche die offenen Schmalseiten des Hohlprofils 11 abdecken. Das Bodenelement weist eine Deckplatte 12 sowie eine parallel dazu angeordnete Bodenplatte 13 auf. Deckplatte 12 und Bodenplatte 13 sind über zur Bodenplatte 13 bzw. Deckplatte 12 vertikal verlaufende Profilstege 14, ..., 19 verbunden. Die Deckplatte 12 weist Aufnahmeöffnungen 20, 21 zur Aufnahme von an sich bekannten Kugelelementen (nicht gezeigt) auf. Diese Kugelelemente bestehen aus einem im wesentlichen zylindrischen Topf, in dem eine frei drehbare Kugel so gelagert ist, daß ein oberes Kugelsegment über den Topf vorsteht (vgl. hierzu: EP 0 413 897 A1). Bei in die Deckplatte 12 eingesetzten Kugelelementen stehen die Kugeln jeweils mit einem vorbestimmten Abstand über die Deckplatte 12 vor, so daß die obersten Punkte der Kugeln eine Auflageebene definieren, auf der Containerfracht verschoben und gelagert werden kann.

Das Bodenelement weist weiterhin Aussparungen 34, 35 auf, die hier durch jeweils übereinanderliegend angeordnete Öffnungen in der Deckplatte 12 und der Bodenplatte 13 gebildet sind. Diese Aussparungen 34, 35 dienen zur Aufnahme von Trägerrahmen 36, 37. Der Trägerrahmen 36 ist speziell zur Aufnahme einer Antriebseinrichtung vorgesehen. Eine solche Antriebseinrichtung kann eine sich unter Belastung in Betrieb setzende angetriebene Rolle umfassen.

Der Trägerrahmen 37 ist zur Aufnahme anderer spezieller Funktionseinheiten, beispielsweise von Befestigungseinrichtungen vorgesehen.

Die Trägerrahmen 36, 37 weisen jeweils der Form der Aussparungen 34, 35 angepaßte Seitenwände 43, ..., 47 auf, so daß diese im eingebauten Zustand an den entsprechenden Rändern der Aussparungen 34, 35 in der Deckplatte 12 und der Bodenplatte 13 des Hohlprofils 11 zur Anlage kommen. Weiterhin weisen die Trägerrahmen 36, 37 eine unterhalb der Seitenwände angeordnete, unter Ausbildung einer Befestigungslasche 48, 57 überstehende Grundplatte 42, 58 auf. Die Seitenwände 43, ..., 47 verlaufen bei den hier dargestellten Trägerrahmen vertikal zu ihren jeweiligen Grundplatten 42, 58.

Die Grundplatten 42, 58 weisen an ihren Befestigungslaschen 48, 57 jeweils Durchgangsbohrungen 59, ..., 62 auf, um die Trägerrahmen 36, 37 im eingesetzten Zustand mit der Bodenplatte 13 des Bodenelements zu verschrauben bzw. zu vernieten.

Die Seitenwände des in Fig. 1 gezeigten Bodenelements werden durch die bereits genannten Seitenprofile 51, 52 an den Schmalseiten sowie weiteren Seitenprofilen 49, 50 an den Längsseiten gebildet. Die Seitenprofile umfassen ein als Federkeil wirkendes Anschlußprofil 32. Das Anschlußprofil 32 ist so ausgebildet, daß es zwischen Deck- und Bodenplatten eines weiteren Bodenelements einsetzbar ist. Das anzuschließende Bodenelement muß an der Anschlußseite zwischen Deckund Bodenplatte unter Ausbildung einer Nut oder dgl. offen sein.

Anzumerken ist weiterhin, daß die Seitenprofile 49, 50 an der Längsseite im vorliegenden Fall einstückig mit der Deckplatte 12 und der Bodenplatte 13 ausgebildet sind. Damit sind hier Seitenprofile 49, 50, Deckplatte 12, Bodenplatte 13 und Profilstege 14, ..., 19 durch ein einziges Hohlprofil gebildet.

Alternativ dazu können die Seitenprofile 49, 50 aber auch lösbar an den Längsseiten des Bodenelements, beispielsweise an jeweils äußeren Profilstegen 14, 19 befestigt werden.

Hinzuweisen ist auch auf die besonders einfache und zweckmäßige Art der Befestigung der Seitenprofile 51, 52 an den Schmalseiten des Bodenelements. Auch dieser Aspekt wird als erfindungswesentlich beansprucht und soll nachfolgend anhand des Seitenprofils 51 erläutert werden. Das Seitenprofil 51 weist an der dem Hohlprofil 11 zugewandten Seite Laschen 53, 54 auf. Diese Laschen 53, 54 sind parallel zueinander derart beabstandet, daß sie zwischen Deckplatte 12 und Bodenplatte 13 des Hohlprofils einschiebbar sind. Die Außenseiten der Laschen 53, 54 kommen dabei jeweils mit den Innenseiten der Deckplatte 12 und der Bodenplatte 13 zur Anlage. Um ein Einschieben der Laschen 53, 54 des Seitenprofils 51 zu ermöglichen, weisen die Profilstege 14, ..., 19 an ihren Endseiten entsprechende schlitzförmige Aussparungen 55, 56 auf, die jeweils eine der Breite der Befestigungslaschen entsprechende Tiefe haben. Die schlitzförmigen Aussparungen 55, 56 sind an den Endseiten der Profilstege 14, ..., 19 direkt oberhalb bzw. unterhalb von den Innenseiten von Boden- bzw. Deckplatte ausgebildet. Die Profilstege 14, ..., 19 gewähren den Laschen 53, 54 des Seitenprofils 51 zusätzlichen Halt.

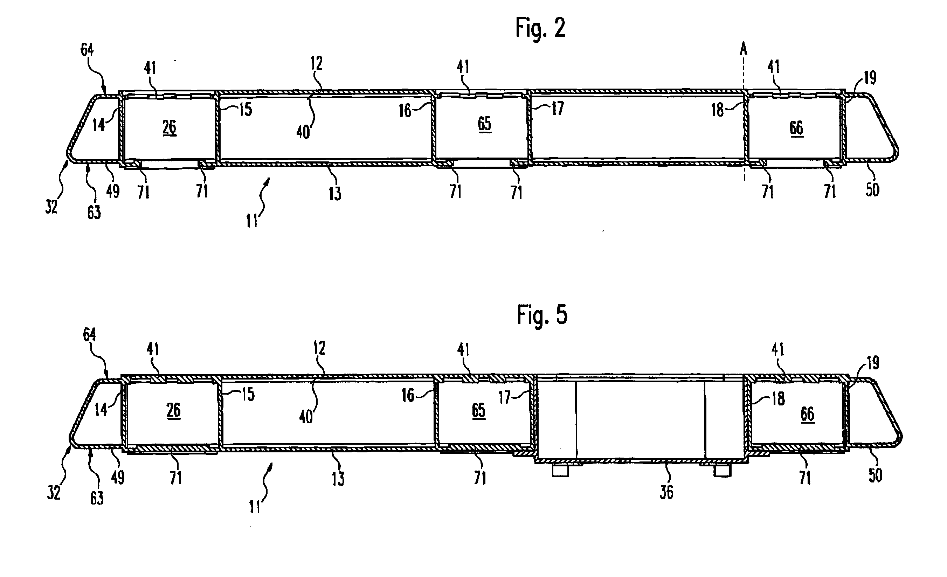

In Fig. 2 ist das Hohlprofil 11 in einer Schnittansicht entlang der Linie II-II aus Fig. 1 dargestellt. Wie bereits unter Bezugnahme auf Fig. 1 erläutert sind Deckplatte 12 und Bodenplatte 13 parallel zueinander beabstandet angeordnet. Zur Beabstandung sind Deckplatte 12 und Bodenplatte 13 über sechs Profilstege 14, ..., 19 miteinander verbunden. Die Profilstege 14, ..., 19 sind bei der hier beschriebenen Ausführungsform jeweils rechtwinklig zu Deckplatte 12 bzw. Bodenplatte 13 angeordnet. Die Profilstege 14, ..., 19 könnten prinzipiell aber auch schräg verlaufen. Die Profilstege verlaufen parallel zueinander in Längsrichtung des Bodenelements. Sie sind jeweils paarweise nebeneinander angeordnet, wobei zwischen jedem Paar von Profilstegen 14, ..., 19 ein Kanal 65, 66, 26 gebildet wird. Somit entstehen ein rechter, mittlerer und linker Kanal 65, 66, 26, die jeweils zur Aufnahme von Kugelelementen dienen. Zu diesem Zweck sind in der Deckplatte 12 über den Kanälen 65, 66, 26 jeweils Aufnahmeöffnungen 20, 21 zum Einsetzen von Kugelelementen eingearbeitet. Diese Aufnahmeöffnungen 20, 21 sind in Längsrichtung des Bodenelements regelmäßig beabstandet (vgl. Fig. 1).

Es ist darauf hinzuweisen, daß nicht in jede der vorgesehenen Aufnahmeöffnungen ein Kugelelement eingesetzt werden muß. Vielmehr ist es möglich, auch nur einen Teil der vorgesehenen Aufnahmeöffnungen mit Kugelelementen zu bestücken. Die nicht benötigten Aufnahmeöffnungen können mit entsprechend geformten Deckeln verschlossen werden.

Die Seitenwände an den Längsseiten des Bodenelements werden durch die einstückig mit dem Hohlprofil 11 ausgebildeten Seitenprofilen 49, 50 gebildet. Die Seitenprofile 49, 50 laufen nach außen nach Art eines Federkeils zusammen. Weiterhin weisen sie gegenüberliegend angeordnete Anschlußflächen 63, 64 auf, die in etwa so beabstandet sind, wie die Innenseiten von Deckplatte 12 und Bodenplatte 13 des Hohlprofils 11. Dadurch läßt sich ein ähnlich ausgebildetes Hohlprofil 11, bei dem insbesondere die Innenseiten von Deckplatte 12 und Bodenplatte 13 in entsprechendem Abstand angeordnet sind, anfügen.

Ein solches, anfügbares Hohlprofil 11 könnte durch ein Profil gebildet sein, das aus dem in Fig. dargestellten erhalten werden kann, wenn man den Teil des Profils mit Profilstegen 18, 19 direkt vor dem Profilsteg 18 abtrennt (vgl. Linie A in Fig. 2). Ein solches, modifiziertes Profil würde nur zwei Kanäle 26, 65 mit vier Profilstegen 14, ..., 17 aufweisen, so daß ein aus den zwei Profilen zusammengefügte Bodenelement fünf längsverlaufende Reihen von Kugelelementen bzw. Aussparungen für Kugelelemente aufweisen würde. Ein derartiges "Erweiterungsprofil" ließe sich - wie bereits erwähnt - durch Auftrennen des hier beschriebenen Grundprofils in Längsrichtung entlang der Linie A (Fig. 2) erhalten. Alternativ dazu könnte das Erweiterungsprofil aber auch direkt als entsprechend geformtes Strangpreßprofil hergestellt werden.

Das hier gezeigte Hohlprofil 11 weist in den Kanälen 26, 65, 66 an der Unterseite 40 der Deckplatte 12 längsverlaufende Verstärkungsrippen 41 auf. Sie dienen zunächst dazu, die Deckplatte 12 gegen die von den Kugelelementen übertragenen Belastungen zu verstärken. Weiterhin bilden die Verstärkungsrippen längs des Randes der Aufnahmeöffnungen 20, 21 für die Kugelelemente Halterungen, in die am Außenumfang der Kugelelemente vorgesehene Rastelemente eingreifen können. Durch die Verstärkungsrippen 41 wird daher auch der Halt der Kugelelemente in den Aufnahmeöffnungen 20, 21 verbessert.

Weiterhin ist auf die in Fig. 2 erkennbaren Verstärkungsrippen 71 an der Bodenplatte 13 in den Kanälen 26, 65, 66 hinzuweisen. Diese Verstärkungsrippen 71 sind vorzugsweise auf der Oberseite der Bodenplatte 13 nach oben gerichtet ausgebildet.

Sie dienen der Aufnahme und Einleitung der Kraft vom Kugelelement, das auf den Verstärkungsrippen 71 aufsteht ("stehendes Kugelelement").

Das in Fig. 2 dargestellte Profil weist insgesamt bei verhältnismäßig geringem Gewicht hohe Stabilität auf. Stabilitätserhöhend wirkt dabei vor allem, daß Deckplatte 12, die Profilstege 14, ..., 19 und die Bodenplatte 13 zusammenhängend und - besonders bevorzugt - einstückig ausgebildet sind. Stabiltätserhöhend wirkt aber allein schon die sich im wesentlichen über das gesamte Bodenelement erstreckende Deckplatte 12. Das in Fig. 2 dargestellte Profil läßt sich als Strangpreßprofil relativ kostengünstig herstellen und bildet einen Grundkörper für das Bodenelement, in das sich die Aufnahmeöffnungen 20, 21 sowie die Aussparungen 34, 35 leicht einarbeiten lassen. Das Bodenelement kann daher als gesamte Einheit vormontiert werden, was wiederum die Einbauzeiten am Montageort im Flugzeug erheblich reduziert.

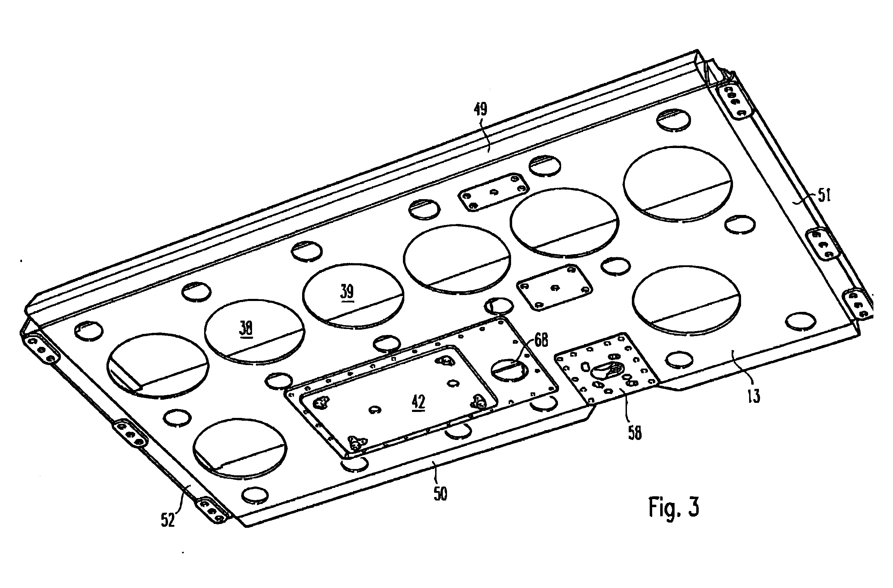

Fig. 3 zeigt das Bodenelement in perspektivischer Ansicht schräg von unten. Dabei sind der Trägerrahmen 36 für die Antriebseinrichtung (PDU) und der Trägerrahmen 37 für die Befestigungseinrichtung in die entsprechenden Aussparungen 34, 35 eingesetzt. Auch sind die Seitenprofile 51, 52 an den Schmalseiten des Hohlprofils 11 eingesetzt. Im Bereich zwischen den Kanälen 26, 65, 66 sind in der Bodenplatte 13 Materialaussparungen 38, 39 eingearbeitet, die keinen nennenswerten Stabilitätsverlust des Bodenelements nach sich ziehen, aber das Gewicht reduzieren. Außerdem können die Materialaussparungen 38, 39 den Ablauf von Flüssigkeiten und/oder eine Luftzirkulation ermöglichen, so daß das als Hohlprofil 11 ausgebildete Bodenelement trocken gehalten werden kann.

Wie aus Fig. 3 weiterhin zu erkennen ist, weist die Grundplatte 42 des Trägerrahmens 36 für die Antriebseinrichtung (PDU) ein Loch 68 auf, das zur Durchführung von Kabeln der Antriebseinrichtung (nicht gezeigt) dienen kann.

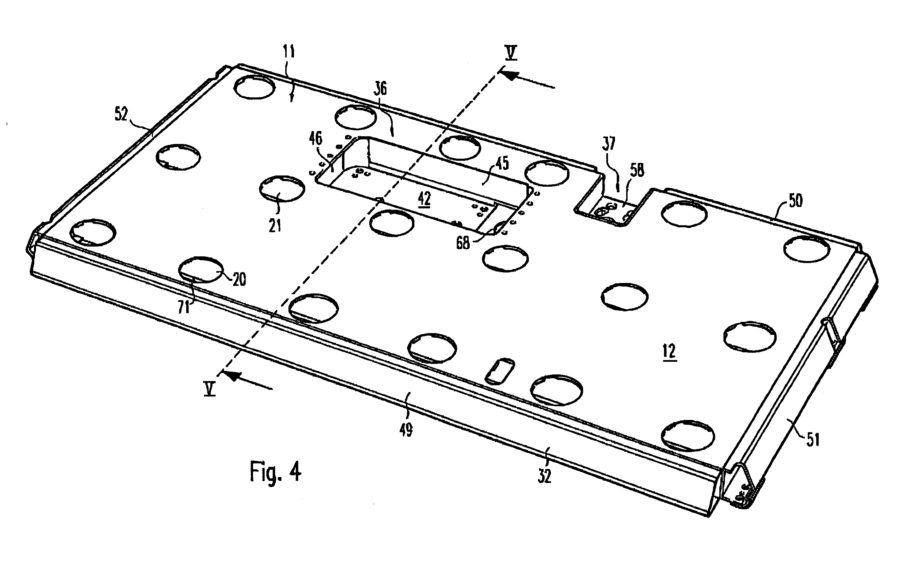

In Fig. 4 ist das Bodenelement aus Fig. 3 in perspektivischer Ansicht schräg von oben gezeigt. Der Trägerrahmen 36 für die Antriebseinrichtung (PDU) ist in das Bodenelement eingesetzt. Dadurch wird im Bodenelement eine wannenförmige Vertiefung gebildet, welche die Aufnahme einer Antriebseinrichtung gestattet. Durch den eingesetzten Trägerrahmen 37 wird eine weitere Vertiefung im Bodenelement für eine andere Funktionseinheit, beispielsweise eine Befestigungseinrichtung geschaffen.

In Fig. 5 ist das Bodenelement in einer Schnittansicht entlang der Linie V-V in Fig. 4 dargestellt. Diese Schnittansicht unterscheidet sich von der in Fig. 2 gezeigten Ansicht vor allem dadurch, daß der Schnitt nun in einem Bereich verläuft, in dem die Deckplatte 12 keine Aufnahmeöffnungen 20, 21 zur Aufnahme von Kugelelementen aufweist. Die Kanäle 26, 65, 66 sind daher in der in Fig. 5 dargestellten Ansicht geschlossen.

Weiterhin ist in der Schnittansicht der eingesetzte Trägerrahmen 36 für die Antriebseinrichtung dargestellt. Die Seitenwände 43, 45 des Trägerrahmens 36 liegen hier direkt an ihren benachbarten Profilstegen 17, 18 flächig an. Der obere Rand der Seitenwände 43, 45 stößt an die Unterseite 40 der Deckplatte 12, die so über die Profilstege 18, 19 überstehend ausgebildet ist, daß der Rand der Aussparung 34 der Deckplatte 12 bündig mit der Innenseite der Seitenwände 43, 45 des Trägerrahmens abschließt. Die Befestigungslasche 48 der Grundplatte 42 liegt an der Außenseite der Bodenplatte 13 an und ist (vgl. Fig. 3) mit der Bodenplatte 13 vernietet oder verschraubt.

Zweckmäßigerweise sind auch Befestigungslaschen 69, 70 am oberen Ende der Seitenwände 46, 44 vorhanden. Über die Befestigungslaschen 69, 70 am oberen Ende der Seitenwände 46, 44 kann der Trägerrahmen 36 an der Unterseite 40 der Deckplatte 12 befestigt, vorzugsweise vernietet oder verschraubt werden.

Sämtliche Merkmale des hier beschriebenen Bodenelements sowie der Trägerrahmen 36, 37 werden zusammen mit den jeweils zugrunde liegenden Herstellungs- bzw. Bearbeitungsverfahren als erfindungswesentlich beansprucht, sofern sie einzeln oder in Kombination gegenüber dem Stand der Technik neu und erfinderisch sind.

### Bezugszeichenliste

- 11: Hohlprofil
- 12: Deckplatte
- 13: Bodenplatte
- 14, ..., 19: Profilstege
- 20, 21: Aufnahmeöffnungen
- 26, 65, 66: Kanal
- 32: Anschlußprofil, Federkeil
- 34, 35: Aussparungen
- 36: Trägerrahmen (für Antriebseinrichtung)
- 37: Trägerrahmen (für Befestigungseinrichtung
- 38, 39: Materialaussparungen
- 40: Unterseite (Deckplatte)
- 41: Verstärkungsrippen
- 42, 58: Grundplatte
- 43, ..., 47: Seitenwände
- 48, 57: Befestigungslasche
- 49, 50: Seitenprofile (Längsseite)
- 51, 52: Seitenprofile (Schmalseite)
- 53, 54: Laschen
- 55, 56: Aussparungen (in Profilstegen)
- 59, ..., 62: Durchgangsbohrungen (Befestigungslasche)
- 63, 64: Anschlußflächen (Seitenprofile)
- 68: Loch
- 69, 70: Befestigungslaschen
- 71: Verstärkungsrippen

## Patentansprüche

1. Bodenelement für das Ladedeck eines Flugzeugs zur Aufnahme und zum Verschieben von Fracht, bestehend aus
- einem Hohlprofil (11) mit einer Deckplatte (12) und einer parallel dazu angeordneten Bödenplatte (13),
- wobei Deckplatte (12) und Bodenplatte (13) durch mehrere in Längsrichtung des Bodenelements verlaufende, zur Deckplatte (12) vorzugsweise vertikale Profilelemente (14, ..., 19) beabstandet sind,
- wobei die Deckplatte (12) Aufnahmeöffnungen (20, 21) zur Aufnahme von Kugelelementen (22, .., 25) aufweist, und
- wobei das so gebildete Hohlprofil (11) einstückig ausgebildet ist.

2. Bodenelement nach Anspruch 1,
**dadurch gekennzeichnet, daß**
durch jeweils zwei längsverlaufende, vertikal zur Deckplatte (12) angeordnete Profilelemente (14, 15) ein Kanal (26) gebildet wird, der einen Aufnahmeraum (27) für in Längsrichtung des Bodenelements beabstandete Kugelelemente definiert.

3. Bodenelement nach Anspruch 1 oder 2,
**dadurch gekennzeichnet, daß**
die sich gegen die Bodenplatte (13) abstützenden Profilelement (14 bis 19) derart ausgebildet sind, daß sie als Versteifungsmittel wirken und die auf die von den Kugelelemente (22, 23) ausgeübten Belastungen auf die Bodenplatte übertragen.

4. Bodenelement nach einem der Ansprüche 1 bis 3,
**dadurch gekennzeichnet, daß**
an mindestens einer Seitenwand des Bodenelements ein Anschlußprofil (32, 33) ausgebildet ist, über das ein weiteres, ein komplementäres Anschlußprofil aufweisendes Bodenelement anschließbar ist.

5. Bodenelement nach Anspruch 4,
**dadurch gekennzeichnet, daß**
das Anschlußprofil als Federkeil (32, 33) ausgebildet ist, der in eine entsprechende Nut, bzw. zwischen Deckplatte (12) und Bodenplatte (13) eines anzuschließenden Bodenelements einführbar ist.

6. Bodenelement nach einem der Ansprüche 1 bis 5,
**dadurch gekennzeichnet, daß**
das Hohlprofil (11) ein Strangpreßteil ist.

7. Bodenelement nach einem der Ansprüche 1 bis 6,
**dadurch gekennzeichnet, daß**
das Hohlprofil (11) an der Deckplatte (12) und/oder an der Bodenplatte (13) - ggf. auch seitlich - Aussparungen (34, 35) zum Einsetzen von Antriebs-, Befestigungs-, oder dgl. Einrichtungen (36, 37) aufweist.

8. Bodenelement nach einem der Ansprüche 1 bis 7,
**dadurch gekennzeichnet, daß**
die Bodenplatte (13) Materialaussparungen (38, 39), insbesondere in den Bereichen zwischen den Profilelementen (14, ..., 19) aufweist.

9. Bodenelement nach einem der Ansprüche 1 bis 8,
**dadurch gekennzeichnet, daß**
die Deckplatte (12) an ihrer dem Kanal (26) zugewandten Unterseite (40) Verstärkungsrippen (41) aufweist.

10. Bodenelement nach einem der Ansprüche 1 bis 9,
**dadurch gekennzeichnet, daß**
die Bodenplatte (13) an ihrer dem Kanal (26, 65, 66) zugewandten Oberseite Verstärkungsrippen (71) als Auflager für ein Kugelelement umfaßt.

11. Verfahren zum Herstellen eines Bodenelements, insbesondere nach einem der Ansprüche 1 bis 10, wobei das Verfahren folgende Schritte umfaßt:
- Herstellen eines stranggepreßten, einstückigen Hohlprofils (11) als Grundkörper für das Bodenelement,
- Einarbeiten von Aufnahmeöffnungen (20, 21) zur Aufnahme von Kugelelementen (22, ..., 25) in eine Deckplatte (12) sowie ggf. weiterer Aussparungen (34, 35) und
- Bestücken aller oder eines Teils der Aufnahmeöffnungen (20, 21) mit Kugelelementen (22, 23).

12. Verfahren nach Anspruch 11, das weiterhin folgenden Schritt umfaßt:
- Bestücken aller oder eines Teils der Aussparungen (34, 35) mit Antriebseinrichtungen (36) oder Befestigungseinrichtungen (37).

13. Trägerrahmen zum Einsetzen von Antriebseinrichtungen (36) oder Befestigungseinrichtungen (37) in dafür vorgesehene Aussparungen (34, 35) eines Bodenelements, insbesondere eines Bodenelements nach einem der Ansprüche 1 bis 9,
**gekennzeichnet durch**
eine Grundplatte (42) und darauf angeordnete Seitenwände (43, ..., 47), wobei die Seitenwände (43, ..., 47) zur Anlage an den Rändern der Aussparungen (34, 35) in der Deckplatte (12) und/oder der Bodenplatte (13) vorgesehen sind,
wobei die Grundplatte (42) vorzugsweise unter Ausbildung einer Befestigungslasche (48) über die Seitenwände (43, ..., 47) nach außen vorragt, und wobei die Befestigungslasche (48) zur Anlage und ggf. Befestigung an der Unterseite der Bodenplatte (13) vorgesehen ist.

## Claims

1. Floor element for the loading deck of an aircraft for receiving and moving cargo, comprising
- a hollow profile (11) with a top plate (12) and a bottom plate (13) arranged parallel thereto,
- the top plate (12) and bottom plate (13) being spaced apart by a plurality of profile elements (14, ..., 19) which run in the longitudinal direction of the floor element and are preferably vertical with respect to the top plate (12),
- the top plate (12) having receiving openings (20, 21) for receiving ball elements (22, ..., 25), and
- the hollow profile (11) thus formed being constructed in one piece.

2. Floor element according to Claim 1, **characterised in that** a channel (26) is formed by in each case two longitudinally running profile elements (14, 15) arranged vertically with respect to the top plate (12), the channel defining a receiving space (27) for ball elements spaced apart in the longitudinal direction of the floor element.

3. Floor element according to Claim 1 or 2, **characterised in that** the profile elements (14 to 19) supported against the bottom plate (13) are constructed in such a way that they act as reinforcing means and transmit the loads exerted on the ball elements (22, 23) to the bottom plate.

4. Floor element according to one of Claims 1 to 3, **characterised in that** a connecting profile (32, 33) is formed on at least one side wall of the floor element, by way of which connecting profile a further floor element having a complementary connecting profile can be connected.

5. Floor element according to Claim 4, **characterised in that** the connecting profile is constructed as a key (32, 33) which can be introduced into a corresponding groove, or between the top plate (12) and bottom plate (13) of a floor element to be connected.

6. Floor element according to one of Claims 1 to 5, **characterised in that** the hollow profile (11) is an extruded part.

7. Floor element according to one of Claims 1 to 6, **characterised in that** the hollow profile (11) has in the top plate (12) and/or in the bottom plate (13) - optionally also laterally - apertures (34, 35) for inserting drive, fixing or suchlike devices (36, 37).

8. Floor element according to one of Claims 1 to 7, **characterised in that** the bottom plate (13) has material cutouts (38, 39), in particular in the regions between the profile elements (14, ..., 19).

9. Floor element according to one of Claims 1 to 8, **characterised in that** the top plate (12) has reinforcing ribs (41) on its lower surface (40) facing the channel (26).

10. Floor element according to one of Claims 1 to 9, **characterised in that** the bottom plate (13) comprises, on its upper surface facing the channel (26, 65, 66), reinforcing ribs (71) as supports for a ball element.

11. Method for producing a floor element, in particular according to one of Claims 1 to 10, the method comprising the following steps:
- production of an extruded, one-piece hollow profile (11) as the basic structure for the floor element,
- formation, in a top plate (12), of receiving openings (20, 21) for receiving ball elements (22, ..., 25), and optionally of further apertures (34, 35), and
- equipping of all or some of the receiving openings (20, 21) with ball elements (22, 23).

12. Method according to Claim 11, which further comprises the following step:
- equipping of all or some of the apertures (34, 35) with drive devices (36) or fixing devices (37).

13. Carrier frame for inserting drive devices (36) or fixing devices (37) into apertures (34, 35) provided therefor in a floor element, in particular a floor element according to one of Claims 1 to 9, **characterised by**
- a base plate (42) and side walls (43, ..., 47) arranged thereon, the side walls (43, ..., 47) being designed to lie against the edges of the apertures (34, 35) in the top plate (12) and/or the bottom plate (13),
the base plate (42) preferably projecting outwards beyond the side walls (43, ..., 47) so as to form a fixing tab (48), and the fixing tab (48) being designed to lie against and optionally be fixed to the lower surface of the bottom plate (13).

## Revendications

1. Élément de sol pour le pont de chargement d'un avion servant à recevoir et à déplacer du fret, se composant
- d'un profilé creux (11) avec une plaque de recouvrement (12) et une plaque de fond (13) disposée parallèlement à celle-ci,
- dans lequel la plaque de recouvrement (12) et la plaque de fond (13) sont espacées par plusieurs éléments profilés (14, ..., 19) s'étendant dans le sens longitudinal de l'élément de sol et disposés de préférence dans le sens vertical par rapport à la plaque de recouvrement (12),
- dans lequel la plaque de recouvrement (12) comprend des ouvertures de logement (20, 21) pour recevoir des éléments sphériques (22, ..., 25) et
- dans lequel le profilé creux (11) ainsi formé est réalisé d'une seule pièce.

2. Elément de sol selon la revendication 1, **caractérisé en ce que** respectivement deux éléments profilés (14, 15) s'étendant dans le sens longitudinal et disposés dans le sens vertical par rapport à la plaque de recouvrement (12) forment un canal (26), qui définit un compartiment de logement (27) pour des éléments sphériques espacés dans le sens longitudinal de l'élément de sol.

3. Elément de sol selon la revendication 1 ou 2, **caractérisé en ce que** les éléments profilés (14 à 19) s'appuyant contre la plaque de fond (13) sont conçus de telle façon qu'ils agissent comme éléments de raidissement et transmettent sur la plaque de fond les contraintes exercées par les éléments sphériques (22, 23).

4. Elément de sol selon l'une des revendications 1 à 3, **caractérisé en ce que** sur au moins une paroi latérale de l'élément de sol est formé un profilé de raccordement (32, 33), par l'intermédiaire duquel peut être raccordé un autre élément de sol comprenant un profilé de raccordement complémentaire.

5. Elément de sol selon la revendication 4, **caractérisé en ce que** le profilé de raccordement est conçu comme languette (32, 33), qui peut être introduite dans une rainure correspondante ou entre la plaque de recouvrement (12) et la plaque de fond (13) d'un élément de sol à raccorder.

6. Elément de sol selon l'une des revendications 1 à 5, **caractérisé en ce que** le profilé creux (11) est une pièce extrudée.

7. Elément de sol selon l'une des revendications 1 à 6, **caractérisé en ce que** le profilé creux (11) comprend sur la plaque de recouvrement (12) et/ou sur la plaque de fond (13) - éventuellement aussi sur les côtés - des évidements (34, 35) pour la mise en place de dispositifs d'entraînement, de dispositifs de fixation ou de dispositifs similaires (36, 37).

8. Elément de sol selon l'une des revendications 1 à 7, **caractérisé en ce que** la plaque de fond (13) comprend des évidements de la matière (38, 39), en particulier dans les zones situées entre les éléments profilés (14, ..., 19).

9. Elément de sol selon l'une des revendications 1 à 8, **caractérisé en ce que** sur son côté inférieur (40) dirigé vers le canal (26) la plaque de recouvrement (12) comprend des nervures de renforcement (41).

10. Elément de sol selon l'une des revendications 1 à 9, **caractérisé en ce que** sur son côté supérieur dirigé vers le canal (26, 65, 66)) la plaque de fond (13) comprend des nervures de renforcement (71) servant d'appui pour un élément sphérique.

11. Procédé pour la réalisation d'un élément de sol, en particulier selon l'une des revendications 1 à 10, comprenant les étapes suivantes :
- réalisation d'un profilé creux extrudé monobloc (11) servant de corps de base pour l'élément de sol,
- réalisation dans une plaque de recouvrement (12) d'ouvertures de logement (20, 21) pour recevoir des éléments sphériques (22, ..., 25) ainsi qu'éventuellement d'autres évidements (34, 35) et
- mise en place dans toutes les ouvertures de logement (20, 21) ou dans une partie de celles-ci d'éléments sphériques (22, 23).

12. Procédé selon la revendication 11, comprenant en outre l'étape suivante:
- mise en place dans tous les évidements (34, 35) ou dans une partie de ceux-ci de dispositifs d'entraînement (36) ou de dispositifs de fixation (37).

13. Cadre porteur pour la mise en place de dispositifs d'entraînement (36) ou de dispositifs de fixation (37) dans des évidements (34, 35) prévus pour cela dans un élément de sol, en particulier dans un élément de sol selon l'une des revendications 1 à 9, **caractérisé par**
- une plaque de base (42) et par des parois latérales (43, ..., 47) placées sur celle-ci, les parois latérales (43, ..., 47) étant prévues pour s'appuyer sur les bords des évidements (34, 35) pratiqués dans la plaque de recouvrement (12) et/ou dans la plaque de fond (13),
la plaque de base (42) dépassant vers l'extérieur au-delà des parois latérales (43, ..., 47), de préférence en formant une nervure de fixation (48), et la nervure de fixation (48) étant prévue pour s'appuyer et éventuellement pour être fixée sur le côté inférieur de la plaque de fond (13).
